# EUROPÄISCHE PATENTSCHRIFT

(11) **EP 2 821 172 B1**
(45) Veröffentlichungstag und Bekanntmachung des Hinweises auf die Patenterteilung: **05.04.2017**
(21) Anmeldenummer: 13003339.2
(22) Anmeldetag: 02.07.2013
(51) Int. Cl.: B23H 9/00, B23H 3/00

(54) **Verfahren zur Herstellung von Mikrostrukturen in Dichtungsbestandteilen**
Method for producing microstructures in seal components
Procédé de fabrication de microstructures dans des éléments d'étanchéité

(43) Veröffentlichungstag der Anmeldung: 07.01.2015
(73) Patentinhaber: Carl Freudenberg KG, 69469 Weinheim (DE); KSMA Karl-Heinz Sitzler Maschinen- und Anlagenbau GmbH, 74214 Schöntal-Bieringen (DE)
(72) Erfinder: Simon, Clemens, 82362 Weilheim (DE); Sitzler, Karl-Heinz, 74214 Schöntal-Bieringen (DE)

(56) Entgegenhaltungen:
- EP-A1- 1 921 356
- EP-A2- 1 146 204
- EP-A2- 1 479 929
- US-A1- 2002 126 923
- US-B1- 6 764 590

## Beschreibung

### Technisches Gebiet

Die Erfindung betrifft ein Verfahren gemäß dem Oberfaegriff des Patentanspruchs 1.

### Stand der Technik

Aus der US 2002/126 923 A1 ist ein solches Verfahren bereits bekannt.

Solche Verfahren sind als sogenannte ECM-Verfahren bekannt, wobei ECM für "Electro Chemical Machining" steht.

Die Ausführbarkeit solcher Verfahren ist in der Fachliteratur, beispielsweise im Fachbuch "Fertigungsverfahren", 4. Auflage, von Fritz Klocke und Wilfried König, erschienen im Springer-Verlag, beschrieben.

Aus der DE 2 134 680 A ist bereits ein Verfahren bekannt, bei welchem eine Elektrode einem Werkstück gegenüber angeordnet wird. Es ist auch bekannt, dass sich ein Elektrolyt zwischen Elektrode und Werkstück befindet, um vom Werkstück Metall elektrochemisch abzutragen.

Aus dem Stand der Technik sind überdies bereits Gleitringdichtungen bekannt, die einen Gleitring umfassen, der axial beweglich gelagert ist, und einen Gegenring, wobei der Gleitring und der Gegenring jeweils aneinander liegende Dichtflächen aufweisen. Es ist auch bekannt, in den Dichtflächen Gasnuten oder hydrodynamisch wirksame Nuten auszubilden.

Gasnuten sind gasdynamisch wirksame dreidimensionale Mikrostrukturen in Dichtflächen und werden heute in vielen Formen und Ausprägungen in der Dichtungsindustrie verwendet.

Die Herstellung der Gasnuten oder hydrodynamisch wirksamer Nuten erfolgt heute meist durch ein abtragendes Verfahren, Dabei sind geforderte Genauigkeiten, typischerweise 9 µm +-2µm, durch eine mechanische Fertigung nur sehr schwer erreichbar.

Bekannt sind vor diesem Hintergrund Verfahren wie beispielsweise Schleifen, Sandstrahlen, Abtragen durch Laserstrahlen oder Erodieren.

Alle diese Verfahren sind für einen großserientechnischen Prozess schlecht geeignet, da sie entweder relativ ungenau oder zu langsam sind, um Millionenstückzahlen preisgünstig herzustellen.

Bei diesen Verfahren ist nachteilig, dass sie nur an einer Stelle der Dichtfläche einen Abtrag verursachen und sehr schwer steuerbar sind. Zudem ist die Erzeugung einer dreidimensionalen Form einer Gasnut oder hydrodynamisch wirksamen Nut nur unter Überwindung großer technischer Hindernisse durchführbar.

Eine In-Prozess-Messung ist bei diesen Verfahren sehr schwer durchführbar, um einen Zielbereich genau anzufahren.

### Darstellung der Erfindung

Der Erfindung liegt daher die Aufgabe zugrunde, ein Werkstück anzugeben, dessen Oberfläche mit besonders exakt gefertigten Strukturen versehen ist und zur Fertigung einer Dichtung geeignet ist.

Die vorliegende Erfindung löst die zuvor genannte Aufgabe durch die Merkmale des Patentanspruchs 1.

Erfindungsgemäß ist erkannt worden, dass bei einem elektrochemischen Abtragen im Gegensatz zu den eingangs genannten Verfahren auf der Oberfläche an der mindestens einen Stelle mindestens eine Mikrostruktur ausgebildet werden kann, wobei die zulässige Abweichung von deren Nennmaß, nämlich die Differenz zwischen dem oberen und dem unteren Grenzmaß zwischen 0 und 4 µm beträgt. Erfindungsgemäß werden sehr exakte Mikrostrukturen geschaffen. Es wurde ein Vorurteil der Fachwelt überwunden, nämlich dass mit einem ECM-Verfahren Mikrostrukturen der oben genannten Feinheit nicht erzeugbar sind. Erfindungsgemäß wird Material des Werkstücks flächig abgetragen. Dabei geht das Metall einer Oberfläche in einem Elektrolyten durch elektrochemische Reaktion in Lösung. Das abgetragene Metall wird durch einen Elektrolytfluss, der durch Pumpen erzeugt wird, weggeschwemmt und in Filtern im Nachgang aus dem Elektrolyten entfernt. Durch Einstellung der Einwirkzeit, der Leitfähigkeit des Elektrolyten, des Stroms und des Abstands zum Werkstück lässt sich dieses Verfahren sehr exakt steuern. Das Verfahren ist bei geeigneter Wahl der Parameter geeignet, ein 6S-Qualitätsziel zu erfüllen. Insoweit ist ein Werkstück herstellbar, dessen Oberfläche mit besonders exakt gefertigten Strukturen versehen ist und/ oder zur Fertigung einer Dichtung geeignet ist.

Das Werkstück wird als Dichtungsbestandteil ausgestaltet oder als Werkstück wird ein Dichtungsbestandteil verwendet. Vorteilhaft können mit dem Verfahren kostengünstig Dichtungen gefertigt werden, weil die für Dichtungen unerlässlichen Toleranzmaße mit dem hier beschriebenen Verfahren eingehalten werden.

Das Werkstück wird als Gleitring oder Gegenring einer Gleitringdichtung ausgestaltet, wobei die Mikrostruktur als Gasnut oder hydrodynamisch wirksame Nut ausgebildet wird, oder als Werkstück wird ein Gleitring oder Gegenring einer Gleitringdichtung verwendet, wobei die Mikrostruktur als Gasnut oder hydrodynamisch wirksame Nut ausgebildet wird. Vorteilhaft erzeugt die Strömung des Elektrolyten quasi zwangsläufig eine strömungsmechanisch günstige Form der Gasnut, die für den späteren Betrieb der Gleitringdichtung äußerst vorteilhaft ist. Die Tiefe einer Gasnut lässt sich über die zuvor genannten Parameter ebenfalls exakt steuern.

Die Form der Gasnut kann frei gewählt werden. So kann deren Geometrie an die ideale theoretische Geometrie angepasst werden. Hierdurch kann die Performance der Dichtung gesteigert werden, ohne dass das Fertigungsverfahren in aufwendiger Weise angepasst werden muss. Bekannte Verfahren weisen hier deutliche Einschränkungen auf.

Besonders vorteilhaft ist, dass das Verfahren zur Herstellung aller Gasnuten zugleich einsetzbar ist. Das Verfahren erlaubt eine sehr schnell durchführbare Produktion von Gleitringdichtungen mit Gasnuten, da ein sukzessives Abtragen einzelner Gasnuten wie bei den herkömmlichen Verfahren entfällt. Durch Parallelschalten mehrerer Anordnungen lassen sich in einer Maschine gleichzeitig mehrere Teile bearbeiten. Hierdurch wird die Wirtschaftlichkeit weiter gesteigert.

Vorteilhaft erfordert das Verfahren keine Nachbearbeitung der Teile. Grate, die bei spanenden Verfahren üblich sind, oder Schlackeauswürfe, wie sie bei Laserverfahren entstehen, treten nicht auf. Die Gasnuten haben durch das Verfahren "weiche" Einlässe und Ausläufe ohne störende Nebeneffekte.

Folglich ist die eingangs genannte Aufgabe gelöst.

Die Nennmaße und Grenzmaß der Mikrostrukturen, insbesondere die Tiefen von Gasnuten oder hydrodynamisch wirksamen Nuten, können mit einem chromatischen Weisslichtsensor oder einem Weißlichtinterferometer gemäß der DIN EN ISO 13385 und 14660 gemessen werden.

An mehreren bestimmten Stellen könnten mehrere Mikrostrukturen simultan in der Oberfläche ausgebildet werden. Hierdurch kann Zeit bei der Fertigung eingespart werden.

Das Werkstück könnte als Bestandteil eines Gleitlagers ausgestaltet werden oder das Werkstück könnte als ein Bestandteil eines Gleitlagers verwendet werden. Das Verfahren kann vorteilhaft auf die Herstellung von hydrodynamisch wirksamen Nuten in Gleitlagern angewendet werden.

Die Oberfläche könnte gegenüber dem Elektrolyten durch eine Maske teilweise abgedichtet werden, wobei die Maske nur an einer oder mehreren bestimmten Stellen einen Durchtritt des Elektrolyten auf die Oberfläche zulässt. Hierdurch können Gasnuten oder hydrodynamisch wirksame Nuten nur an vorbestimmten Stellen exakt definiert erzeugt werden.

Der Elektrolyt könnte in einem Strömungskreislauf geführt werden. Hierdurch kann der Elektrolyt wieder verwendet werden. Es muss keine neue Elektrolytflüssigkeit auf eine bestimmte Betriebstemperatur verbracht werden. Der Stromfluss könnte pulsiert geführt werden. Hierdurch kann die Oberfläche des Werkstücks positiv beeinflusst werden.

Die Elektrode und das Werkstück könnten statisch gehalten werden. Durch die Verwendung unbewegter Elektroden und Werkstücke können Bauteile eingespart werden, welche das Werkstück und/ oder die Elektrode bewegen.

Die Oberfläche könnte in einem Schritt geglättet und poliert werden. Hierdurch kann Fertigungszeit eingespart werden. Des Weiteren können weitere Prozessschritte eingespart werden.

Als Werkstück könnte ein Bauteil verwendet werden, welches Edelstahl aufweist. Edelstahl ist elektrisch leitend und zur Fertigung von Dichtfläche besonders gut geeignet.

Mehrere Werkstücke könnten in mehreren Arbeitsstationen gleichzeitig bearbeitet werden. So kann die Produktionsrate gesteigert werden.

Ein Dichtungsbestandteil ist durch ein Verfahren mit den folgenden Schritten hergestellt: Anordnen einer Elektrode gegenüber der Oberfläche eines Werkstücks; Führen eines Elektrolyten zwischen die Elektrode und die Oberfläche; Erzeugen eines elektrischen Stromflusses zwischen dem Werkstück und der Elektrode; und Elektrochemisches Abtragen von Material des Werkstücks an mindestens einer bestimmten Stelle der Oberfläche.

Bei einem Verfahren, welches den Schritt des Erodierens umfasst, können Funken überspringen. Bei ECM-Verfahren können keine Funken überspringen und können somit keine Krater in der Oberfläche eines Werkstücks entstehen. Die Oberflächen sind überraschend besonders glatt und können mit sehr feinen Mikrostrukturen versehen werden. Je nach Stromdichte lässt sich sogar ein Hochglanzpolieren der Oberfläche erreichen, was wiederum strömungstechnisch sehr vorteilhaft ist.

Ein Dichtungsbestandteil könnte auch durch ein erfindungsgemäßes Verfahren der hier beschriebenen Art hergestellt sein.

### Kurzbeschreibung der Zeichnung

In der Zeichnung zeigen
- Fig. 1: eine Anordnung, bei welcher eine Elektrode einer Vorrichtung einem Werkstück gegenüberliegt, in dem Gasnuten oder hydrodynamisch wirksame Nuten erzeugt werden sollen,
- Fig. 2: eine schematische Ansicht einer Anlage, mit welcher das Verfahren durchführbar ist.

### Ausführung der Erfindung

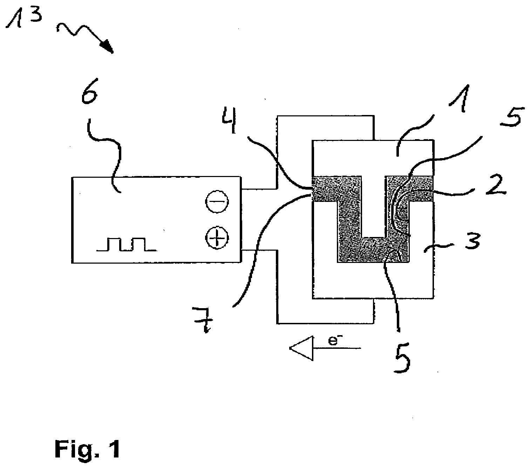

Fig. 1 zeigt eine Anordnung zur Durchführung eines Verfahrens, welches die folgenden Schritte umfasst:
Anordnen einer Elektrode 1 gegenüber der Oberfläche 2 eines Werkstücks 3; Führen eines Elektrolyten 4 zwischen die Elektrode 1 und die Oberfläche 2; Erzeugen eines elektrischen Stromflusses zwischen dem Werkstück 3 und der Elektrode 1; Elektrochemisches Abtragen von Material des Werkstücks 3 an mindestens einer bestimmten Stelle der Oberfläche 2.

Auf der Oberfläche 2 wird an der mindestens einen Stelle mindestens eine Mikrostruktur ausgebildet, wobei die zulässige Abweichung von deren Nennmaß, nämlich die Differenz zwischen dem oberen und dem unteren Grenzmaß zwischen 0 und 4 µm beträgt.

An mehreren bestimmten Stellen werden mehrere Mikrostrukturen simultan in der Oberfläche 2 ausgebildet.

Das Werkstück 3 wird als Dichtungsbestandteil ausgestaltet oder als Werkstücks 3 wird ein Dichtungsbestandteil verwendet.

Das Werkstück 3 wird als Gleitring oder Gegenring einer Gleitringdichtung ausgestaltet, wobei die Mikrostruktur als Gasnut oder hydrodynamisch wirksame Nut ausgebildet wird. Als Werkstück 3 kann auch ein Gleitring oder Gegenring einer Gleitringdichtung verwendet werden, wobei die Mikrostruktur als Gasnut oder hydrodynamisch wirksame Nut ausgebildet wird.

Die Oberfläche 2 wird gegenüber dem Elektrolyten 4 durch eine Maske 5 teilweise abgedichtet, wobei die Maske 5 nur an einer oder mehreren bestimmten Stellen einen Durchtritt des Elektrolyten 4 auf die Oberfläche 2 zulässt.

Der Elektrolyt 4 wird in einem Strömungskreislauf geführt. Der Stromfluss wird pulsiert geführt. Die Elektrode 1 und das Werkstück 3 werden statisch gehalten.

Die Oberfläche 2 kann in einem Schritt geglättet und poliert werden.

Als Werkstück 3 wird ein Bauteil verwendet, welches Edelstahl aufweist.

Zur Erzeugung des Stromflusses ist ein Generator 6 vorgesehen. Die Anordnung umfasst eine Vorrichtung 13 mit Elektrode 1.

Fig. 1 zeigt, dass die Elektrode 1 die positive Ausprägung der hierzu negativen Form der Gasnut ist. Dabei ist die Geometrie etwas kleiner als die spätere Sollgeometrie der Mikrostrukturen. Ein Spalt 7 beträgt bevorzugt 0,2 mm.

Die Elektrode 1 wird von einer nichtleitenden Maske 5 umgeben, die mit der Elektrode 1 einen Spalt 7 bildet. Zwischen der Elektrode 1 und der Maske 5 fließt durch den Spalt 7 ein Elektrolyt 4. Der Elektrolyt 4 kann NaCl oder andere Metallsalze enthalten.

Der Elektrolyt 4 hat folgende Aufgaben:
Herstellung einer Strom leitenden Verbindung zwischen Elektrode 1 und Werkstück 3. Kühlung der Elektrode 1 während der Bearbeitung und Abtransport des anfallenden Abtrags.

Fig, 2 zeigt, dass der Elektrolyt 4 aus einem Beruhigungsbecken, nämlich einem Elektrolyttank 9, entnommen wird. Er sollte während des Verfahrens die gleiche Leitfähigkeit beibehalten. Er wird durch Pumpen in den Spalt 7 gedrückt und strömt zur Atmosphäre frei ab.

Die Maske 5 dichtet den Elektrolyten 4 zum Werkstück 3 hin ab, so dass der Elektrolyt 4 die Stellen, die nicht bearbeitet werden sollen, nicht erreichen kann.

Da die Maske 5 mechanisch gemeinsam mit der Elektrode 1 aufgesetzt wird und die Elektrode 1 zur Maske 5 einen festen, jedoch einstellbaren, Abstand einnimmt, ist auch der Abstand zum Werkstück 3 fest eingestellt.

Somit kann der Abtrag allseitig gleich tief erfolgen. Durch die Wahl unterschiedlicher Abstände der Elektrode 1 zum Werkstück 3 können unterschiedlich tiefe Geometrien in einem Arbeitsgang erzeugt werden. So ist eine dreidimensionale Geometrie der Gasnut erzeugbar.

Die unterschiedlich tiefen Geometrien sind für das spätere strömungstechnische Verhalten der Gasnuten besonders vorteilhaft.

Zwischen Werkstück 3 und Elektrode 1 wird ein Gleichstrom angelegt. Dieser kann zeitweise pulsierend gewählt werden, da dadurch die Oberfläche 2 des Werkstücks 3 positiv beeinflusst werden kann. Die Zeiten hierfür liegen typischerweise im Millisekundenbereich.

Durch die über den Stromfluss gut steuerbare Bearbeitungszeit und durch die Regelung der sehr trägen Parameter Elektrolyttemperatur, Elektralytdruck und Elektrolytzusammensetzung lassen sich die Geometrien sehr genau einstellen und reproduzieren.

Da die Gesamtzeit der Bearbeitung bei ca. 10 s liegt, ist das Verfahren für eine Großserienfertigung gut geeignet und sehr wirtschaftlich.

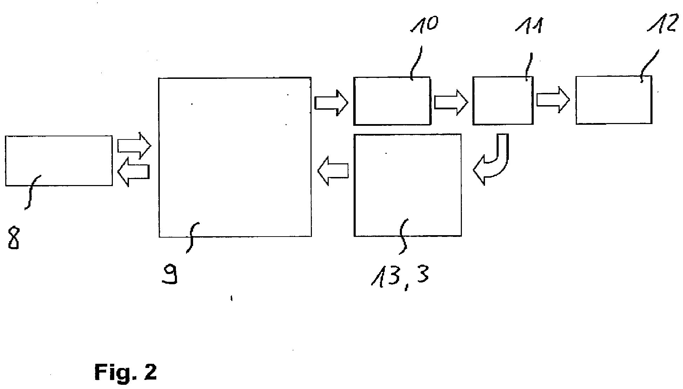

Fig. 2 zeigt eine schematische Ansicht einer Anlage, mit welcher das Verfahren durchführbar ist.

Die Anlage umfasst eine Filteranlage 8, einen Elektrolyttank 9 mit Temperatur- und Leitwertregelung, eine Pumpe 10, einen Filter 11, einen Atmosphärenausgang 12 und eine Vorrichtung 13 mit Werkstück 3.

Der Speisedruck des Elektrolyten 4 ist ein wichtiger Bearbeitungsparameter. Der Speisedruck beträgt zwischen 1 und 6 bar, bevorzugt 4 bar.

Der Elektrolyt 4 wird durch Filter 11, insbesondere Kerzenfilter oder Filterpressen, vom Abtrag gereinigt und dann im Kreislauf wiederverwendet.

Die Temperatur des Elektrolyten 4 wird konstant gehalten. Da die Temperatur die Leitfähigkeit beeaflusst und über den elektrischen Widerstand während der Bearbeitung ansteigen würde, ist eine Rückkühlung auf Raumtemperatur wichtig.

Um gleichmaßig tiefe Gasnuten zu erzeugen, ist ein gleichbleibender Abstand der Elektrode 1 zur Oberfläche 2 des Werkstücks 3 wichtig. Dieser Abstand wird durch eine flächige Auflage der Maske 5 auf der Oberfläche 2 des Werkstücks 3 erreicht.

## Patentansprüche

1. Verfahren, umfassend die Schritte:
Anordnen einer Elektrode (1) gegenüber der Oberfläche (2) eines Werkstücks (3);
Führen eines Elektrolyten (4) zwischen die Elektrode (1) und die Oberfläche (2);
Erzeugen eines elektrischen Stromflusses zwischen dem Werkstück (3) und der Elektrode (1);
Elektrochemisches Abtragen von Material des Werkstücks (3) an mindestens einer bestimmten Stelle der Oberfläche (2),
wobei auf der Oberfläche (2) an der mindestens einen Stelle mindestens eine Mikrostruktur ausgebildet wird, wobei die zulässige Abweichung von deren Nennmaß, nämlich die Differenz zwischen dem oberen und dem unteren Grenzmaß zwischen 0 und 4 µm beträgt,
**dadurch gekennzeichnet, dass**
das Werkstück (3) als Dichtungsbestandteil ausgestaltet wird oder dass als Werkstück (3) ein Dichtungsbestandteil verwendet wird, wobei das Werkstück (3) als Gleitring oder Gegenring einer Gleitringdichtung ausgestaltet wird, wobei die Mikrostruktur als Gasnut oder hydrodynamisch wirksame Nut ausgebildet wird, oder wobei als Werkstück (3) ein Gleitring oder Gegenring einer Gleitringdichtung verwendet wird, wobei die Mikrostruktur als Gasnut oder hydrodynamisch wirksame Nut ausgebildet wird.

2. Verfahren nach Anspruch 1, **dadurch gekennzeichnet, dass** an mehreren bestimmten Stellen mehrere Mikrostrukturen simultan in der Oberfläche (2) ausgebildet werden.

3. Verfahren nach einem der voranstehenden Ansprüche, **dadurch gekennzeichnet, dass** die Oberfläche (2) gegenüber dem Elektrolyten (4) durch eine Maske (5) teilweise abgedichtet wird, wobei die Maske (5) nur an einer oder mehreren bestimmten Stellen einen Durchtritt des Elektrolyten (4) auf die Oberfläche (2) zulässt.

4. Verfahren nach einem der voranstehenden Ansprüche, **dadurch gekennzeichnet, dass** der Elektrolyt (4) in einem Strömungskreislauf geführt wird.

5. Verfahren nach einem der voranstehenden Ansprüche, **dadurch gekennzeichnet, dass** der Stromfluss pulsiert geführt wird.

6. Verfahren nach einem der voranstehenden Ansprüche, **dadurch gekennzeichnet, dass** die Elektrode (1) und das Werkstück (3) statisch gehalten werden.

7. Verfahren nach einem der voranstehenden Ansprüche, **dadurch gekennzeichnet, dass** die Oberfläche (2) in einem Schritt geglättet und poliert wird.

8. Verfahren nach einem der voranstehenden Ansprüche, **dadurch gekennzeichnet, dass** als Werkstück (3) ein Bauteil verwendet wird, welches Edelstahl aufweist.

9. Verfahren nach einem der voranstehenden Ansprüche, **dadurch gekennzeichnet, dass** mehrere Werkstücke (3) in mehreren Arbeitsstationen gleichzeitig bearbeitet werden.

## Claims

1. Method, comprising the steps:
arranging an electrode (1) opposite the surface (2) of a workpiece (3);
leading an electrolyte (4) between the electrode (1) and the surface (2);
producing a flow of electric current between the workpiece (3) and the electrode (1);
electrochemical ablation of material of the workpiece (3) at at least one specific point of the surface (2);
at least one microstructure being formed on the surface (2) at the at least one point, the permissible deviation from its nominal dimension, namely the difference between the upper and the lower limiting dimensions, being between 0 and 4 µm,
**characterized in that**
the workpiece (3) is configured as a seal component or **in that** a seal component is used as the workpiece (3), wherein the workpiece (3) is configured as a sliding ring or mating ring of a sliding ring seal, the microstructure being formed as a gas groove or hydrodynamicaJ.ly active groove, or wherein a sliding ring or mating ring of a sliding ring seal is used as a workpiece (3), the microstructure being formed as a gas groove or hydrodynamically active groove.

2. Method according to Claim 1, **characterized in that** a plurality of microstructures are simultaneously formed in the surface (2) at a plurality of specific points.

3. Method according to one of the preceding claims, **characterized in that** the surface (2) is partially sealed off with respect to the electrolyte (4) by a mask (5), wherein the mask (5) permits the electrolyte (4) to reach the surface (2) only at one or more specific points.

4. Method according to one of the preceding claims, **characterized in that** the electrolyte (4) is recirculated.

5. Method according to one of the preceding claims, **characterized in that** the current flow is guided in a pulsed mainer.

6. Method according to one of the preceding claims, **characterized in that** the electrode (1) and the workpiece (3) are held statically.

7. Method according to one of the preceding claims, **characterized in that** the surface (2) is smoothed and polished in one step.

8. Method according to one of the preceding claims, **characterized in that** the workpiece (3) used is a component which has stainless steel.

9. Method according to one of the preceding claims, **characterized in that** a plurality of workpieces (3) are processed simultaneously in a plurality of workstations.

## Revendications

1. Procédé, comprenant les étapes consistant à :
disposer une électrode (1) de manière opposée à la surface (2) d'une pièce à usiner (3) ;
acheminer un électrolyte (4) entre l'électrode (1) et la surface (2) ;
générer un flux de courant électrique entre la pièce à usiner (3) et l'électrode (1) ;
éliminer électrochimiquement du matériau de la pièce à usiner (3) sur au moins un point déterminé de la surface (2),
dans lequel au moins une microstructure est réalisée sur la surface (2) sur l'au moins un point, dans lequel l'écart admissible par rapport à sa dimension nominale, à savoir la différence entre les dimension limites supérieure et inférieure est comprise entre 0 et 4 µm,
**caractérisé en ce que**
la pièce à usiner (3) est conçue en tant que composant d'étanchéité ou **en ce qu'**un composant d'étanchéité est utilisé en tant que pièce à usiner (3), dans lequel la pièce à usiner (3) est conçue sous la forme d'un anneau glissant ou d'un contre-anneau d'une garniture d'étanchéité à anneau glissant, dans lequel la microstructure est réalisée sous la forme d'une fente de passage de gaz ou d'une fente à effet hydrodynamique, ou dans lequel un anneau glissant ou un contre-anneau d'une garniture d'étanchéité à anneau glissant est utilisé en tant que pièce à usiner (3), dans lequel la microstructure est réalisée sous la forme d'une fente de passage de gaz ou d'une fente à effet hydrodynamique.

2. Procédé selon la revendication 1, **caractérisé en ce que** plusieurs microstructures sont réalisées simultanément dans la surface (2) en plusieurs points déterminés.

3. Procédé selon l'une quelconque des revendications précédentes, **caractérisé en ce que** la surface (2) est rendue partiellement étanche par un masque (5) opposé à l'électrolyte (4), dans lequel le masque (5) permet un passage de l'électrolyte (4) sur la surface (2) en seulement un ou plusieurs points déterminés.

4. Procédé selon l'une quelconque des revendications précédentes, **caractérisé en ce que** l'électrolyte (4) est guidé dans un circuit d'écoulement.

5. Procédé selon l'une quelconque des revendications précédentes, **caractérisé en ce que** le flux de courant est guidé de manière pulsée.

6. Procédé selon l'une quelconque des revendications précédentes, **caractérisé en ce que** l'électrode (1) et la pièce à usiner (3) sont maintenues statiques,

7. Procédé selon l'une quelconque des revendications précédentes, **caractérisé en ce que** la surface (2) est lissée et polie lors d'une étape.

8. Procédé selon l'une quelconque des revendications précédentes, **caractérisé en ce qu'**un composant qui comporte de l'acier inoxydable est utilisé en tant que pièce à usiner (3).

9. Procédé selon l'une quelconque des revendications précédentes, **caractérisé en ce que** plusieurs pièces à usiner (3) sont traitées simultanément dans plusieurs postes de travail.
